# EUROPÄISCHE PATENTSCHRIFT

(11) **EP 1 633 965 B1**
(45) Veröffentlichungstag und Bekanntmachung des Hinweises auf die Patenterteilung: **03.03.2010**
(21) Anmeldenummer: 04719460.0
(22) Anmeldetag: 11.03.2004
(51) Int. Cl.: F02D 41/16, F02D 31/00, F02D 41/22

(54) **VERFAHREN UND VORRICHTUNG ZUM BETREIBEN EINES VERBRENNUNGSMOTORS**
METHOD AND DEVICE FOR OPERATING AN INTERNAL COMBUSTION ENGINE IN OVERRUN CONDITIONS
PROCEDE ET DISPOSITIF DE FONCTIONNEMENT D'UN MOTEUR A COMBUSTION INTERNE

(30) Priorität: 17.04.2003 DE 10317649
(43) Veröffentlichungstag der Anmeldung: 15.03.2006
(73) Patentinhaber: ROBERT BOSCH GMBH, 70442 Stuttgart (DE)
(72) Erfinder: PITZAL, Volker, 73550 Waldstetten/Wissgoldingen (DE); VON SCHWERTFUEHRER, Gerit, 71642 Ludwigsburg (DE)
(86) Internationale Anmeldenummer: PCT/EP2004/050291
(87) Internationale Veröffentlichungsnummer: WO 2004/092565

(56) Entgegenhaltungen:
- DE-A- 3 301 742
- DE-A- 19 836 845
- DE-C- 19 947 052

## Beschreibung

### Stand der Technik

Die Erfindung betrifft Verfahren zum Betreiben eines Verbrennungsmotors im Schiebebetrieb mit den Schritten: Freigeben einer Überwachung eines Ansteuersignals für ein Leistungsstellglied des Verbrennungsmotors dann, wenn vorbestimmte Freigabebedingungen erfüllt sind, die das Überschreiten einer Freigabedrehzahl des Verbrennungsmotors umfassen, nach der Freigabe, Vergleichen eines Ansteuersignals für das Leistungsstellglied des Verbrennungsmotors mit einem Schwellenwert, und Auslösen einer Fehlerreaktion dann, wenn das Ansteuersignal den Schwellenwert überschreitet.

Die Erfindung betrifft ferner ein Steuergerät zur Steuerung der Verfahren.

Ein solches Verfahren, ein solches Steuergerät und eine solche Verwendung sind aus der DE 33 01 742 der Anmelderin bekannt.

Unter einem Schiebebetrieb eines Verbrennungsmotors wird im Folgenden ein Betrieb verstanden, bei dem der Verbrennungsmotor kein Drehmoment abgibt, sondern vielmehr selbst durch externe Einflüsse angetrieben wird. Ein Schiebebetrieb tritt beispielsweise beim Abbremsen oder bei einer Bergabfahrt eines Kraftfahrzeugs auf, wenn der Fahrer kein Drehmoment anfordert. Der Übergang in den Schiebebetrieb kann beispielsweise durch einen Fahrerwunschgeber, beispielsweise einen Fahrpedalgeber erfasst werden.

Als Leistungsstellglied kommen sowohl luftzumessende Stellglieder, beispielsweise eine Drosselklappe oder eine variable Ventilsteuerung, als auch kraftstoffzumessende Stellglieder, typischerweise ein Einspritzsystem, in Frage. Als Fehlerreaktion kann beispielsweise die Endstufe des Leistungsstellgliedes deaktiviert werden.

Die oben angegebene DE 33 01 742 betrifft ein Electronic Diesel Control-System für einen Dieselmotor (EDC). Die vorliegende Erfindung betrifft ebenfalls EDC-Systeme, ist aber nicht darauf beschränkt. Sie kann vielmehr auch bei Ottomotoren mit E-Gas (elektronisch gesteuerter Drosselklappe) oder bei einer variablen Ventilsteuerung, die als Leistungsstellglied dient, verwendet werden.

Soweit im folgenden von einem Ansteuersignal die Rede ist, soll dieser Begriff sowohl eine Impulsbreite, mit der ein Einspritzventil öffnend angesteuert wird, als auch ein Ansteuersignal eines luftzumessenden Leistungsstellgliedes erfassen.

Bei Dieselmotoren wird das erzeugte Drehmoment wesentlich durch die Kraftstoffeinspritzmenge bestimmt. Dies gilt analog für Ottomotoren mit Direkteinspritzung im Schichtbetrieb. Fehler in der Kraftstoffzumessung können in diesen Fällen zu einer unerwünschten Drehmomenterzeugung führen. Insbesondere im Schiebebetrieb kann ein unerwünscht erzeugtes motorisches Drehmoment sicherheitskritisch sein, weil es zu einer ungenügenden Motorbremswirkung oder sogar zu einem unerwünschten Beschleunigen führen kann.

Es ist in diesem Zusammenhang per se bekannt, die Ansteuerdauer der Einspritzventile zu überwachen. Dabei wird beim Übergang in den Schiebebetrieb durch Loslassen des Fahrpedals überwacht, ob oberhalb der maximalen Eingriffsdrehzahl eines Leerlaufreglers noch Einspritzungen durch unzulässig hohe Ansteuerdauern auftreten.

Im Fehlerfall, also bei unerwünschten Einspritzungen, wird eine Fehlerreaktion eingeleitet. Dazu wird die Ansteuersignaldauer mit einem festen Schwellenwert verglichen. Der Wert des Schwellenwerts bestimmt die Empfindlichkeit der Fehlererkennung. Ist der Schwellenwert klein, ist die Empfindlichkeit, mit der echte Fehler entdeckt werden, groß. Allerdings führt eine hohe Empfindlichkeit auch zu der Gefahr, dass reguläre Drehmomentanforderungen einer Leerlaufregelung als Fehler gewertet werden.

Die Motordrehzahl, unter der keine Freigabe für die Schiebebetriebsüberwachung erfolgt, also die Freigabedrehzahl, liegt Verbrennungsmotor-spezifisch recht hoch und entspricht in der Regel der oberen Grenzdrehzahl der Leerlaufregelung. Ein typischer Wert der Grenzdrehzahl ist ca. 2500 min⁻¹. Für die Qualität der Überwachung hat das zu Folge, dass beim Auftreten eine unerwünschten Bereitstellung von Drehmoment das Fahrzeug mit der aktuell im Getriebe aktiven Übersetzung beschleunigt, bis die Freigabedrehzahl erreicht ist.

Vor diesem Hintergrund besteht die Aufgabe der Erfindung in der Angabe eines Verfahrens, das eine Steigerung der Qualität der Überwachung durch Erweiterung des überwachten Betriebsbereiches des Verbrennungsmotors ohne Einbußen bei der Qualität der Unterscheidung einer fehlerhaften von einer nicht fehlerhaften Bereitstellung von Drehmoment ermöglicht.

Diese Aufgabe wird sowohl bei einem Verfahren als auch bei einem Steuergerät der eingangs genannten Art dadurch gelöst, dass die Freigabedrehzahl als Funktion des Eingriffs einer Leerlaufregelung in eine Bildung des Ansteuersignals variiert wird, bzw. dadurch, dass das Steuergerät die Freigabedrehzahl als Funktion des Eingriffs einer Leerlaufregelung in eine Bildung des Ansteuersignals variiert.

### Vorteile der Erfindung

Durch diese Merkmale wird die Aufgabe vollkommen gelöst. Die Erfindung bezieht das aus der Leerlaufregelung resultierende Drehmoment mit in die Freigabe der Überwachung ein. Wenn die Leerlaufregelung den Grund für eine Drehmomenterhöhung liefert, die sich nicht mit dem Fahrerwunsch deckt, wird die Überwachung erst oberhalb einer oberen Drehzahl freigegeben. In den Fällen, in denen die Leerlaufregelung kein Drehmoment anfordert und/oder erzeugt, wird die Überwachung bereits bei einer niedrigeren Freigabedrehzahl freigegeben. Im zeitlichen Mittel über einen längeren Zeitraum wird die Zeitdauer, in der die Überwachung aktiv ist, erhöht. Daraus resultiert eine in der Summe gesteigerte Überwachungsqualität.

Speziell in Fällen, in denen sich ein Drehmoment bei fehlendem oder kleinem Leerlaufreglereingriff unerwünscht aufbaut, wird dies früher erkannt und es kann früher reagiert werden. Als Folge kann bereits eingegriffen werden, bevor das Fahrzeug in dem gerade eingelegten Gang bis zur Höchstdrehzahl der Leerlaufregelung beschleunigt hat. Ein unerwünschtes Beschleunigen kann damit weitgehend vermieden werden.

Fordert dagegen eine Teilfunktion der Motorsteuerung fehlerhaft einen Aufbau von Drehmoment an, wenn zeitgleich die Leerlaufregelung in erlaubter Weise Drehmoment anfordert, hat dieser Fehler keine negativen Folgen und es ist daher nicht nachteilig, dass eine Überwachung erst oberhalb der oberen Freigabedrehzahl erlaubt ist.

Es ist bevorzugt, dass die Freigabedrehzahl aus wenigstens zwei Werten ausgewählt wird.

Diese Ausgestaltung ist einfach zu realisieren und hat bereits einen erheblichen Zuwachs an Überwachungsqualität zur Folge.

Ferner ist bevorzugt, dass der höchste der wenigstens zwei möglichen Werte von dem Eingriff der Leerlaufregelung unabhängig ist.

Diese Ausgestaltung hat den Vorteil, dass bspw. auch Fehler der Leerlaufregelung selbst detektiert werden können, so dass ein fehlerhaft großer Eingriff der Leerlaufregelung die Freigabe der Überwachung nicht blockieren kann.

Bevorzugt ist auch, dass unterhalb des niedrigsten der wenigstens zwei möglichen Werte keine Freigabe erlaubt ist.

Diese Ausgestaltung berücksichtigt, dass die Eingriffe der Leerlaufregelung bei kleinen Drehzahlen häufig erfolgen und mit großen Drehmomentforderungen behaftet sein können, so dass eine Freigabe der Überwachung bei niedrigen Drehzahlen, etwa unterhalb von ca. 1500 min⁻¹, nicht sinnvoll erscheint.

Weiter ist bevorzugt, dass genau zwei Werte für die Freigabedrehzahl möglich sind, wobei der niedrigere der zwei Werte dann ausgewählt wird, wenn der Eingriff der Leerlaufregelung einen vorbestimmten Schwellenwert nicht überschreitet.

Diese Ausgestaltung ist ebenfalls sehr einfach zu realisieren und hat bereits einen erheblichen Zuwachs an Überwachungsqualität zur Folge.

Eine bevorzugte Alternative sieht vor, dass wenigstens drei Werte für die Freigabedrehzahl möglich sind, wobei einer der wenigstens zwei niedrigeren Werte dann ausgewählt wird, wenn der Eingriff der Leerlaufregelung einen Schwellenwert unterschreitet, der jeweils einem der niedrigeren Werte individuell zugeordnet ist.

Bevorzugt ist auch, dass die Freigabedrehzahl durch Zugriff auf eine Kennlinie ausgewählt wird, die mit dem Eingriff der Leerlaufregelung adressiert wird.

Diese Ausgestaltungen ermöglichen eine weitere Steigerung der Überwachungsqualität durch ein mehrstufiges oder sogar stetiges Variieren der Abhängigkeit der Freigabedrehzahl von dem Eingriff der Leerlaufregelung.

Ferner ist bevorzugt, dass der Eingriff der Leerlaufregelung im Regelkreis der Leerlaufregelung vor oder nach der Bildung einer Stellgröße erfasst wird.

Mit Blick darauf, dass die Leerlaufregelung in einem geschlossenen Kreis arbeitet, kann der Eingriff der Leerlaufregelung aus Signalen an verschiedenen Punkten des Kreises abgeschätzt werden. So kann die Stellgröße selbst oder eine Regelabweichung verwendet werden. Außerdem ist es unerheblich, ob der Eingriff auf Momentenbasis oder Mengenbasis bestimmt wird, da beide Größen über den Motorwirkungsgrad miteinander verknüpft sind. Die Berechnungen im Steuergerät erfolgen im Allgemeinen je nach physikalischem Zusammenhang in Drehmomenteinheit (Fahrerwunschmoment, Drehmomentbegrenzung, ...) oder Mengeneinheit bzw. Ansteuersignaleinheit (Rauchbegrenzung, Mengenausgleichsregelung). Die Verbindung erfolgt über ein Motorwirkungsgradkennfeld. Die in der vorliegenden Anmeldung für Drehmomente offenbarten Überlegungen sind daher zu entsprechenden Betrachtungen zu Mengen (Kraftstoffmengen, Luftmengen) äquivalent.

Bevorzugt wird ferner eine Verwendung des Steuergerätes zur Steuerung des Schiebebetriebs eines Verbrennungsmotors, wobei das Ansteuersignal eine Einspritzimpulsbreite für ein Kraftstoff-Einspritzventil oder ein Stellsignal für ein luftzumessendes Stellglied ist.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen:
- Fig. 1: schematisch einen Verbrennungsmotor mit Stellgliedern, Sensorik und einem Steuergerät;
- Fig. 2: Figur 2 zeigt ein Ausführungsbeispiel eines erfindungsgemäßen Verfahrens und eines erfindungsgemäßen Steuergerätes in der Form von Funktionsblöcken; und
- Fig. 3: Drehzahlbereiche, in denen die Überwachung aktiv ist.

### Beschreibung der Ausführungsbeispiele

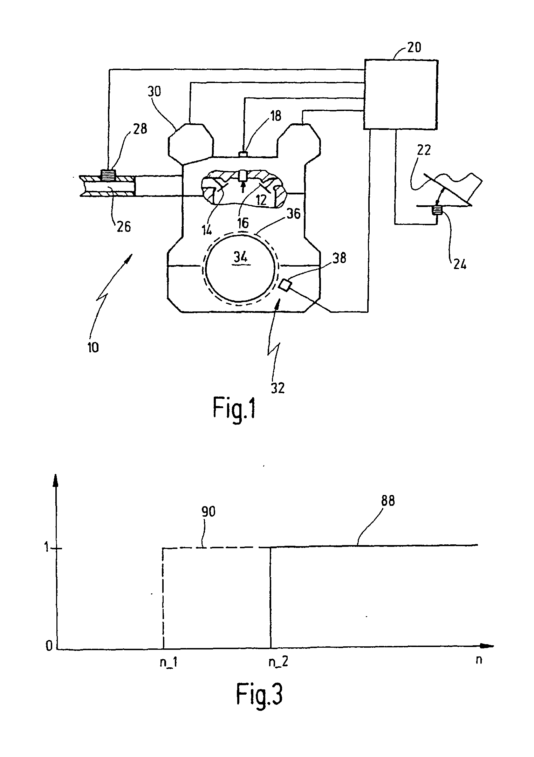

Die Ziffer 10 in der Figur 1 bezeichnet die Gesamtansicht eines stark schematisiert dargestellten Verbrennungsmotors mit wenigstens einem Brennraum 12. Eine Füllung des Brennraums 12 wird über ein Einlassventil 14 und ein Auslassventil 16 ausgewechselt. Zu einer Luftfüllung des Brennraums 12 wird über ein Einspritzventil 18 Kraftstoff zugemessen, wobei der Zeitpunkt der Zumessung und die zugemessene Menge von einem Steuergerät 20 gesteuert werden. Dabei wird das Einspritzventil 18 als Leistungsstellglied benutzt. Die zugemessene Menge bestimmt ganz wesentlich das vom Verbrennungsmotor 10 erzeugte Drehmoment. Die Ansteuerung des Leistungsstellgliedes erfolgt unter anderem in Abhängigkeit von einem Fahrerwunsch, der über ein Fahrpedal 22 von einem Fahrpedalgeber 24 erfasst und an das Steuergerät 20 weitergeleitet wird.

Eine solche Art der Leistungssteuerung ist für einen Dieselmotor typisch. Eine vergleichbare Leistungssteuerung über die Menge des zugemessenen Kraftstoffs erfolgt auch bei einem Ottomotor mit Direkteinspritzung im Betrieb mit geschichteter Brennraumfüllung. Im Unterschied zum Dieselmotor, bei dem die Einspritzung die Verbrennung auslöst, erfolgt beim Ottomotor eine Fremdzündung der Brennraumfüllung, beispielsweise durch eine Zündkerze. Bei einem Ottomotor mit Direkteinspritzung, der im Homogenbetrieb, also mit homogener Gemischverteilung im Brennraum 12, betrieben wird, erfolgt die Einstellung des gewünschten Drehmomentes in Abhängigkeit vom Fahrerwunsch über die Menge der Füllung des Brennraums 12.

Dies gilt analog auch für einen Verbrennungsmotor mit Saugrohreinspritzung. In diesen Fällen kann die Menge der Brennraumfüllung über eine Drosselklappe 26, die von einem Drosselklappensteller 28 in gesteuerter Weise vom Steuergerät 20 betätigt wird, eingestellt werden. In diesem Fall dient die Drosselklappe 26 mit dem Drosselklappensteller 28 als Leistungsstellglied. Alternativ kann die Menge der Füllung des Brennraums 12 auch über eine variable Ansteuerung des Einlassventils 14 durch einen Einlassventilsteller 30, der ebenfalls vom Steuergerät 20 angesteuert wird, erfolgen. Der Verbrennungsmotor 10 weist ferner eine Drehzahlsensorik 32 auf, die beispielsweise aus einem Geberrad 34 mit ferromagnetischen Markierungen 36 und einem Induktivsensor 38 bestehen kann.

Mit Blick auf die Überwachung würde beispielsweise ein bestimmter Drosselklappenöffnungswinkel einer Ansteuerdauer eines Einspritzventils 18 entsprechen, da beide Größen in ihrem jeweiligen technischen Umfeld jeweils wesentlich das Drehmoment des Verbrennungsmotors 10 bestimmen. Bei einer variablen Ventilsteuerung wäre gegebenenfalls die Ansteuerdauer oder der Ventilhub das angemessene Kriterium.

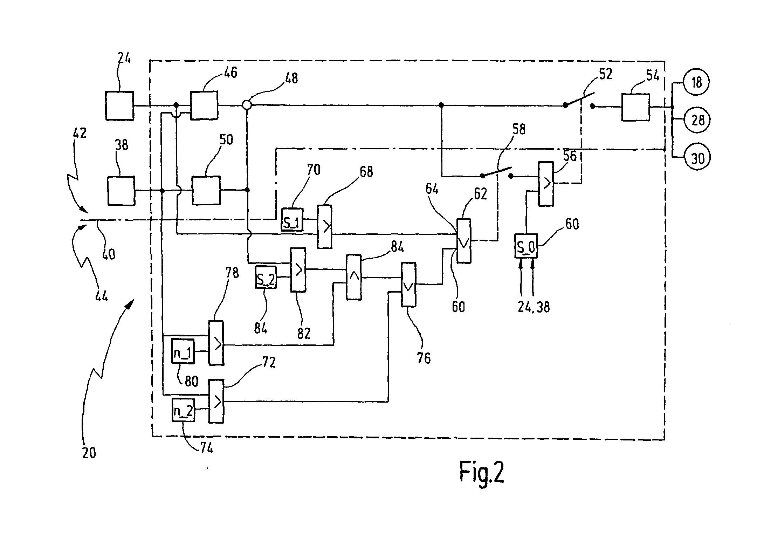

Figur 2 zeigt ein Ausführungsbeispiel eines erfindungsgemäßen Verfahrens und eines erfindungsgemäßen Steuergerätes in der Form von Funktionsblöcken.

Das Steuergerät 20 wird funktionsmäßig durch eine Linie 40 in eine erste, obere Ebene 42 und eine zweite, untere Ebene 44 unterteilt. Dabei entspricht diese Unterteilung der Programmstruktur des Motorsteuerungsprogramms, das im Steuergerät 20 abgearbeitet wird. Dem Steuergerät 20 werden eingangsseitig Signale verschiedener Sensoren, insbesondere Signale des Fahrpedalgebers 24 und des Induktivsensors 38 zugeführt. In der ersten Ebene 42 werden aus diesen Signalen Ansteuersignale für wenigstens eines der Leistungsstellglieder 18, 28 oder 30 gebildet, mit denen das Steuergerät 20 ausgangsseitig verbunden ist. Die zweite Programmebene 44 dient zur Überwachung der ersten Ebene. Beide Ebenen sind funktional miteinander gekoppelt. So erhält die zweite Ebene 44 beispielsweise ein leistungsbestimmendes Signal aus der Kette zur Formung des Ansteuersignals für die Leistungsstellglieder 18, 28 oder 30 in der Ebene 1. Ergibt die Überprüfung dieses Signals in der Ebene 2 eine sicherheitskritische Unplausibilität, so kann die Ebene 2 in die Ebene 1 eingreifen, um beispielsweise einen sicherheitskritischen Drehmomentanstieg des Verbrennungsmotors 10 zu verhindern oder zu verringern.

In der Ebene 1 wird zunächst in einem Block 46 auf der Basis des Fahrerwunsches (Fahrpedalgeber 24) und der Drehzahl (Induktivsensor 38) des Verbrennungsmotors 10 ein Wunschmoment oder eine Wunschmenge berechnet. Dabei bezieht sich der Begriff der Wunschmenge auf die Menge des leistungsbestimmenden Arbeitsmediums des Verbrennungsmotors 10. Dieses kann eine einzuspritzende Kraftstoffmenge sein, die über Kraftstoffzumessventile 18 zugemessen wird. Alternativ oder ergänzend kann sich diese Wunschmenge auch auf die Füllung des Brennraums 12 mit Luft oder Kraftstoff/Luft-Gemisch beziehen. Die Füllung des Brennraums 12 wird durch entsprechende Ansteuerung des Drosselklappenstellers 28 oder des Einlassventilstellers 30 eingestellt. Wunschmoment und Wunschmenge sind über den Motorwirkungsgrad miteinander verknüpft und daher alternativ verwendbar. Dem so gebildeten Wunschmoment/der Wunschmenge wird in der Verknüpfung 48 der Eingriff einer Leerlaufregelung 50 überlagert, die auf der Basis des Drehzahlsignals des Induktivsensors 38 gebildet wurde. Die Verknüpfung kann additiv oder multiplikativ sein. Über einen im Normalfall geschlossenen ersten Schalter 52 wird das Ergebnis der Verknüpfung im Block 48 an einen Block 54 übergeben, der die endgültige Ansteuersignalformung und Endstufe im Steuergerät 20 repräsentiert. Das Ausgangssignal des Blocks 54 dient zur Ansteuerung wenigstens eines der leistungsbestimmenden Stellglieder 18, 28 und/oder 30 aus Figur 1.

Diese Funktion der Ansteuersignalbildung und Ansteuersignalformung aus der ersten Programmebene 42 im Steuergerät 20 wird durch die zweite Programmebene 4-4 überprüft. Dazu wird das Ergebnis der Verknüpfung im Block 48 der Ebene 1 im Vergleichsblock 56 mit einem zulässigen oder plausiblen Wert S_0 verglichen, der vom Block 60 bereitgestellt wird. Block 60 können dazu beispielsweise ebenfalls die Signale des Fahrpedalgebers 24 und der Drehzahlsensorik 32 zugeführt werden, sodass Block 60 daraus durch Nachbildung der Funktionen der Blöcke 46, 48 und 50 aus der ersten Ebene und Addieren eines Offsets den Wert S_0 für ein höchst zulässiges Mengensignal oder Drehmoment-Wunschsignal bilden kann. Ist das über den Schalter 58 anliegende, in der ersten Ebene tatsächlich gebildete Signal größer als der höchst zulässige Wert S_0, öffnet Block 56 den Schalter 52 in der ersten Ebene. Block 54 in der ersten Ebene gibt dann Ersatzwerte an die Leistungsstellglieder 18, 28 und/oder 30 aus, um einen unerwünschten Drehmomentanstieg oder eine unerwünschte Bereitstellung vom Drehmoment zu verhindern. Alternativ kommt auch eine Deaktivierung des Blockes 54 in Frage, so dass kein Ansteuersignal ausgegeben wird. Dabei erfolgt die Freigabe der Überwachung der ersten Ebene 42 durch die zweite Ebene 44 durch Schließen des zweiten Schalters 58.

Im Folgenden wird beschrieben, wie diese Freigabe erfolgt.

Das Signal des Induktivsensors 38 wird dazu einem Vergleichsblock 72 zugeführt, dem parallel ein Wert n_2 einer höheren Freigabedrehzahl zugeführt wird. Die höhere Freigabedrehzahl n_2 kann beispielsweise der oberen Grenzdrehzahl entsprechen, unterhalb der die Leerlaufregelung 50 in der ersten Ebene 42 aktiv ist. Ist die tatsächliche Drehzahl des Verbrennungsmotors größer als diese Drehzahl n_2, die beispielsweise 2300 min⁻¹ sein kann, so liefert die Leerlaufregelung 50 unter normalen Umständen keinen drehmomentsteigernden Eingriff an die Verknüpfung 48 in der ersten Ebene 42. Der Bildung der Ansteuersignale für die Leistungsstellglieder 18, 28 und/oder 30 sind daher keine Eingriffe der Leerlaufregelung 50 überlagert, die eine Überwachung der Ansteuersignalbildung in der ersten Ebene 42 stören könnten.

Der Vergleichsblock 72 gibt in diesem Fall beispielsweise eine logische 1 aus, die über die ODER-Verknüpfung 76 an einen zweiten Eingang 66 der bereits erwähnten logischen UND-Verknüpfung 62 geführt wird. Parallel wird einem ersten Eingang 64 der Verknüpfung 62 das Signal eines Vergleichsblocks 68 zugeführt. Das Signal des Vergleichsblocks 68 ist dann logisch 1, wenn der Drehmomentwunsch des Fahrers unterhalb einer Schwelle S_1 liegt, die vom Block 70 bereitgestellt wird. Dabei wird das Fahrerwunschsignal vom Fahrpedalgeber 24 bereitgestellt. Block 68 gibt beispielsweise dann eine logische 1 aus, wenn der Fahrpedalwinkel gleich 0 ist. Ist gleichzeitig die Motordrehzahl größer als n_2, gibt Block 62 die Überwachung durch Schließen des zweiten Schalters 58 frei.

Diese Art der Steuerung der Freigabe auf der Basis einer festen Freigabedrehzahl n_2 ist bereits bekannt. Erfindungsgemäß wird alternativ oder ergänzend zu der festen Freigabedrehzahl n_2 eine Freigabedrehzahl verwendet, die als Funktion des Eingriffs der Leerlaufregelung 50 in die Bildung des Ansteuersignals in den Blöcken 46, 48 und 54 der ersten Ebene 42 variabel ist.

Dazu wird bei der Ausgestaltung bei der Figur 2 das Ausgangssignal der Leerlaufregelung 50 parallel zu seiner Weiterverarbeitung in der ersten Ebene 42 auch an die zweite Ebene 44 übergeben. In der zweiten Ebene 44 wird es einem Vergleichsblock 82 zugeführt, dem parallel ein Schwellenwert S_2 zugeführt wird. S_2 entspricht einem Schwellenwert für den Eingriff der Leerlaufregelung 50, der für eine Freigabe noch tolerierbare Werte von nicht mehr tolerierbaren Werten trennt. Ist der Eingriff der Leerlaufregelung 50 beispielsweise relativ klein, also kleiner als der Schwellenwert S_2, so gibt der Vergleichsblock 82 eine logische 1 an eine nachgeschaltete UND-Verknüpfung 84. Dieser UND-Verknüpfung 84 wird parallel das Ausgangssignal eines Vergleichsblocks 78 zugeführt, in dem die Drehzahl des Verbrennungsmotors 10, also das Signal des Induktivsensors 38, mit einer niedrigeren Freigabedrehzahl n_1 verglichen wird. Der Wert n_1 kann beispielsweise der oberen Grenzdrehzahl einer Vorsteuerung der Leerlaufregelung 50, beispielsweise ca. 1500 min⁻¹, entsprechen. Der Wert n_1 wird in der Fig. 2 von dem Block 80 bereitgestellt. Dabei kann Block 80, wie beschrieben, einen Festwert ausgeben. Alternativ kann Block 80 eine Kennlinie repräsentieren, dem, abweichend von der Darstellung der Fig. 2, der Eingriff des Leerlaufreglers 50 zugeführt wird und der einen von diesem Eingriff stetig oder stufenförmig abhängigen Wert n_1 ausgibt. Im Ergebnis wird dann auch oberhalb dieser niedrigeren Freigabedrehzahl n_1 bei gleichzeitig kleinem Eingriff der Leerlaufregelung 50 eine Überwachung der Ansteuersignalbildung in der ersten Ebene 42 erlaubt, in dem das Ausgangssignal des Vergleichsblocks 84 über die ODER-Verknüpfungen 76 und 62 den Schalter 58 schließt.

Figur 3 veranschaulicht die Wirkung der Erfindung zur Darstellung von Drehzahlbereichen, in denen eine Freigabe nach dem Stand der Technik oder nach der hier dargestellten Erfindung möglich ist. Dabei entspricht der Wert 0 einem Sperren und der Wert 1 entspricht einer Freigabe der Überwachung. Die durchgezogene Linie 88 in der Figur 3 repräsentiert den Stand der Technik. Nach dem Stand der Technik wurde die Überwachung erst oberhalb einer vergleichsweise hohen Drehzahl n_2 freigegeben. Die durchgezogene Linie 90 verdeutlicht, wie im Rahmen der Erfindung eine Freigabe bereits bei einer niedrigeren Drehzahl n_1 möglich ist. Voraussetzung ist, wie weiter oben dargestellt, dass in dem nach der Erfindung nun ebenfalls einer Überwachung zugänglichen Drehzahlbereich zwischen n_1 und n_2 nur ein vergleichsweise kleiner Eingriff der Leerlaufregelung 50 vorliegt.

## Patentansprüche

1. Verfahren zum Betreiben eines Verbrennungsmotors (10) im Schiebebetrieb mit den Schritten:
Freigeben einer Überwachung eines Ansteuersignals für ein Leistungsstellglied (18; 28; 30) des Verbrennungsmotors (10) dann, wenn vorbestimmte Freigabebedingungen erfüllt sind, die das Überschreiten einer Freigabedrehzahl des Verbrennungsmotors (10) umfassen,
nach der Freigabe, Vergleichen eines Ansteuersignals für das Leistungsstellglied (18; 28; 30) des Verbrennungsmotors (10) mit einem Schwellenwert, und
Auslösen einer Fehlerreaktion dann, wenn das Ansteuersignal den Schwellenwert überschreitet,
**dadurch gekennzeichnet, dass**
die Freigabedrehzahl als Funktion des Eingriffs einer Leerlaufregelung (50) in eine Bildung des Ansteuersignals variiert wird.

2. Verfahren nach Anspruch 1, **dadurch gekennzeichnet, dass** die Freigabedrehzahl aus wenigstens zwei Werten ausgewählt wird.

3. Verfahren nach Anspruch 2,**dadurch gekennzeichnet, dass** der höchste der wenigstens zwei möglichen Werte von dem Eingriff der Leerlaufregelung (50) unabhängig ist.

4. Verfahren nach einem der Ansprüche 1 bis 3, **dadurch gekennzeichnet, dass** unterhalb des niedrigsten der wenigstens zwei möglichen Werte keine Freigabe erlaubt ist.

5. Verfahren nach Anspruch 3 und 4, **dadurch gekennzeichnet, dass** genau zwei Werte für die Freigabedrehzahl möglich sind, wobei der niedrigere der zwei Werte dann ausgewählt wird, wenn der Eingriff der Leerlaufregelung (50) einen vorbestimmten Schwellenwert nicht überschreitet.

6. Verfahren nach Anspruch 3 und 4, **dadurch gekennzeichnet, dass** wenigstens drei Werte für die Freigabedrehzahl möglich sind, wobei einer der wenigstens zwei niedrigeren Werte dann ausgewählt wird, wenn der Eingriff der Leerlaufregelung (50) einen Schwellenwert unterschreitet, der jeweils einem der niedrigeren Werte individuell zugeordnet ist.

7. Verfahren nach Anspruch 1 oder 2, **dadurch gekennzeichnet, dass** die Freigabedrehzahl durch Zugriff auf eine Kennlinie ausgewählt wird, die mit dem Eingriff der Leerlaufregelung adressiert wird.

8. Verfahren nach einem der vorhergehenden Ansprüche, **dadurch gekennzeichnet, dass** der Eingriff der Leerlaufregelung (50) im Regelkreis der Leerlaufregelung (50) vor oder nach der Bildung einer Stellgröße erfasst wird.

9. Steuergerät (20) zum Betreiben eines Verbrennungsmotors (10) im Schiebebetrieb, wobei das Steuergerät (20) eine Überwachung eines Ansteuersignals für ein Leistungsstellglied (18; 28; 30) des Verbrennungsmotors (10) dann freigibt, wenn vorbestimmte Freigabebedingungen erfüllt sind, die das Überschreiten einer Freigabedrehzahl des Verbrennungsmotors umfassen, und
nach der Freigabe, ein Ansteuersignal für das Leistungsstellglied (18; 28; 30) des Verbrennungsmotors (10) mit einem Schwellenwert vergleicht und dann eine Fehlerreaktion auslöst, wenn das Ansteuersignal den Schwellenwert überschreitet,
**dadurch gekennzeichnet, dass**
das Steuergerät die Freigabedrehzahl als Funktion des Eingriffs einer Leerlaufregelung (50) in eine Bildung des Ansteuersignals variiert.

10. Steuergerät (20) nach Anspruch 9, **dadurch gekennzeichnet, dass** es wenigstens eines der Verfahren nach den Ansprüchen 2 bis 8 steuert.

11. Verwendung eines Steuergerätes (20) nach Anspruch 9 oder 10 zur Steuerung des Schiebebetriebs eines Verbrennungsmotors (10), **dadurch gekennzeichnet, dass** das Ansteuersignal eine Einspritzimpulsbreite für ein Kraftstoff-Einspritzventil (18) oder ein Stellsignal für ein luftzumessendes Stellglied (28; 30) ist.

## Claims

1. Method for operating an internal combustion engine (10) in the overrun mode, having the steps:
enabling monitoring of an activation signal for a power actuator (18; 28; 30) of the internal combustion engine (10) when predetermined enable conditions are met, which conditions encompass the exceedance of an enable rotational speed of the internal combustion engine (10),
after the enablement, comparing an activation signal for the power actuator (18; 28; 30) of the internal combustion engine (10) with a threshold value, and
triggering a fault reaction when the activation signal exceeds the threshold value,
**characterized in that**
the enable rotational speed is varied as a function of the intervention of an idle regulator (50) in a formation of the activation signal.

2. Method according to Claim 1, **characterized in that** the enable rotational speed is selected from at least two values.

3. Method according to Claim 2, **characterized in that** the highest of the at least two possible values is independent of the intervention of the idle regulator (50).

4. Method according to one of Claims 1 to 3,
**characterized in that** no enablement is permitted below the lowest of the at least two possible values.

5. Method according to Claims 3 and 4, **characterized in that** precisely two values are possible for the enable rotational speed, with the lower of the two values being selected when the intervention of the idle regulator (50) does not exceed a predetermined threshold value.

6. Method according to Claims 3 and 4, **characterized in that** at least three values are possible for the enable rotational speed, with one of the at least two lower values being selected when the intervention of the idle regulator (50) falls below a threshold value assigned individually to in each case one of the lower values.

7. Method according to Claim 1 or 2, **characterized in that** the enable rotational speed is selected by accessing a characteristic curve addressed using the intervention of the idle regulator.

8. Method according to one of the preceding claims, **characterized in that** the intervention of the idle regulator (50) in the regulating loop of the idle regulator (50) is measured before or after the formation of an actuating variable.

9. Control unit (20) for operating an internal combustion engine (10) in the overrun mode, with the control unit (20) enabling monitoring of an activation signal for a power actuator (18; 28; 30) of the internal combustion engine (10) when predetermined enable conditions are met, which conditions encompass the exceedance of an enable rotational speed of the internal combustion engine, and
after the enablement, comparing an activation signal for the power actuator (18; 28; 30) of the internal combustion engine (10) with a threshold value and then triggering a fault reaction when the activation signal exceeds the threshold value,
**characterized in that**
the control unit varies the enable rotational speed as a function of the intervention of an idle regulator (50) in a formation of the activation signal.

10. Control unit (20) according to Claim 9,
**characterized in that** said control unit (20) controls at least one of the methods according to Claims 2 to 8.

11. Use of a control unit (20) according to Claim 9 or 10 for controlling the overrun mode of an internal combustion engine (10), **characterized in that** the activation signal is an injection pulse width for a fuel injection valve (18) or an actuating signal for an air-metering actuator (28; 30).

## Revendications

1. Procédé pour faire fonctionner un moteur à combustion interne (10) en mode de poussée, comprenant les étapes suivantes :
lancement d'une surveillance d'un signal de commande pour un actionneur de puissance (18 ; 28 ; 30) du moteur à combustion interne (10) lorsque des conditions de lancement prédéterminées sont satisfaites, lesquelles incluent le dépassement d'un régime de lancement du moteur à combustion interne (10),
après le lancement, comparaison d'un signal de commande pour l'actionneur de puissance (18 ; 28 ; 30) du moteur à combustion interne (10) avec une valeur seuil, et
déclenchement d'une réaction d'erreur lorsque le signal de commande est au dessus de la valeur seuil,
**caractérisé en ce que**
le régime de lancement est modifié en fonction de l'intervention d'une régulation de marche à vide (50) dans une formation du signal de commande.

2. Procédé selon la revendication 1, **caractérisé en ce que** le régime de lancement est choisi parmi au moins deux valeurs.

3. Procédé selon la revendication 2, **caractérisé en ce que** la plus haute des au moins deux valeurs possibles est indépendante de l'intervention de la régulation de marche à vide (50).

4. Procédé selon l'une quelconque des revendications 1 à 3, **caractérisé en ce qu'**en dessous de la plus basse des au moins deux valeurs possibles, aucun lancement n'est permis.

5. Procédé selon les revendications 3 et 4,
**caractérisé en ce que** deux valeurs exactement pour le régime de lancement sont possibles, la plus basse des deux valeurs étant choisie lorsque l'intervention de la régulation de marche à vide (50) ne dépasse pas une valeur seuil prédéterminée.

6. Procédé selon les revendications 3 et 4,
**caractérisé en ce qu'**au moins trois valeurs pour le régime de lancement sont possibles, l'une des au moins deux valeurs plus basses étant choisie lorsque l'intervention de la régulation de marche à vide (50) est en dessous d'une valeur seuil qui est à chaque fois associée individuellement à l'une des valeurs plus basses.

7. Procédé selon les revendications 1 ou 2,
**caractérisé en ce que** le régime de lancement est choisi en accédant à une caractéristique qui est adressée avec l'intervention de la régulation de marche à vide.

8. Procédé selon l'une quelconque des revendications précédentes, **caractérisé en ce que** l'intervention de la régulation de marche à vide (50) dans le circuit de réglage de la régulation de marche à vide (50) est détectée avant ou après la formation d'une valeur de réglage.

9. Appareil de commande (20) pour faire fonctionner un moteur à combustion interne (10) en mode de poussée, dans lequel l'appareil de commande (20) lance une surveillance d'un signal de commande pour un actionneur de puissance (18 ; 28 ; 30) du moteur à combustion interne (10) lorsque des conditions de lancement prédéterminées sont satisfaites, lesquelles incluent le dépassement d'un régime de lancement du moteur à combustion interne, et
après le lancement, compare un signal de commande pour l'actionneur de puissance (18 ; 28 ; 30) du moteur à combustion interne (10) avec une valeur seuil, et déclenche une réaction d'erreur lorsque le signal de commande est au dessus de la valeur seuil,
**caractérisé en ce que**
l'appareil de commande modifie le régime de lancement en fonction de l'intervention d'une régulation de marche à vide (50) dans une formation du signal de commande.

10. Appareil de commande (20) selon la revendication 9, **caractérisé en ce qu'**il commande au moins l'un des procédés selon les revendications 2 à 8.

11. Utilisation d'un appareil de commande (20) selon la revendication 9 ou 10, pour la commande du mode de poussée d'un moteur à combustion interne (10), **caractérisée en ce que** le signal de commande est une largeur d'impulsion d'injection pour une soupape d'injection de carburant (18) ou un signal de réglage pour un actionneur de dosage d'air (28 ; 30).
